Europäisches Patentamt

European Patent Office

Office européen des brevets

(19)

(11) **EP 1 214 509 B1**

(12) **FASCICULE DE BREVET EUROPEEN**

(45) Date de publication et mention
de la délivrance du brevet:
**23.03.2005 Bulletin 2005/12**

(51) Int Cl.⁷: **F02D 41/02**, F02D 41/14,
F01N 3/20

(21) Numéro de dépôt: **00962649.0**

(22) Date de dépôt: **15.09.2000**

(86) Numéro de dépôt international:
**PCT/FR2000/002558**

(87) Numéro de publication internationale:
**WO 2001/021950 (29.03.2001 Gazette 2001/13)**

(54) **PROCEDE D'ECHAUFFEMENT D'UN CATALYSEUR EQUIPANT UN MOTEUR A COMBUSTION INTERNE A INJECTION DIRECTE D'ESSENCE COMPRENANT PLUSIEURS CYLINDRES**

**VERFAHREN ZUM AUFHEIZEN EINES KATALYSATORS EINER DIREKTEINSPRITZENDEN MEHRZYLINDRIGEN OTTO-BRENNKRAFTMASCHINE**

**METHOD FOR HEATING A CATALYST PROVIDED IN A DIRECT FUEL INJECTION INTERNAL COMBUSTION ENGINE COMPRISING SEVERAL CYLINDERS**

(84) Etats contractants désignés:
**DE ES GB IT**

(30) Priorité: **20.09.1999 FR 9911743**

(43) Date de publication de la demande:
**19.06.2002 Bulletin 2002/25**

(73) Titulaire: **Renault s.a.s.**
**92100 Boulogne Billancourt (FR)**

(72) Inventeurs:
• **BEURTHEY, Stephan**
**F-91430 Vauhallan (FR)**
• **BAUX, Antoine**
**F-75005 Paris (FR)**

(56) Documents cités:
**FR-A- 2 721 653**     **FR-A- 2 755 186**
**GB-A- 2 316 338**     **US-A- 5 655 365**

# Description

La présente invention est relative à un procédé d'échauffement d'un catalyseur pour moteur à combustion interne à injection directe.

Pour réduire la pollution de l'atmosphère par les gaz d'échappement des moteurs à combustion interne, en particulier de ceux qui assurent la propulsion des véhicules automobiles, il est connu d'équiper les lignes d'échappement de ces moteurs d'un pot catalytique ou catalyseur ayant pour fonction de transformer les substances chimiques nocives en des substances moins nocives, voire inoffensives.

C'est ainsi que l'on connaît un catalyseur dit "à trois voies" ou "trifonctionnel" du fait qu'il assure une triple fonction d'oxydation des hydrocarbures imbrûlés (HC), d'oxydation du CO en $CO_2$ et de réduction des oxydes d'azote ($NO_x$) en azote gazeux.

En général, le catalyseur est placé loin du moteur d'abord pour le protéger thermiquement, mais aussi pour des raisons d'architecture du véhicule et de performances du moteur. Il en résulte qu'il s'échauffe relativement lentement aux démarrages à froid du moteur et ne peut ainsi traiter les gaz nocifs que tardivement. C'est pourquoi on a mis au point différentes stratégies visant à accélérer la montée en température du catalyseur, afin qu'il puisse aussi rapidement que possible traiter les polluants à la stoechiométrie.

L'une des stratégies d'échauffement connues consiste à créer différentes richesses du mélange en faisant fonctionner le moteur avec des cylindres "riches" (brûlant un mélange air/carburant riche) et des cylindres "pauvres" (brûlant un tel mélange pauvre). Cette stratégie conduit à la production dans la ligne d'échappement de gaz oxydants et de gaz réducteurs (HC et CO).

Les gaz réducteurs provenant des cylindres riches vont alors réagir avec l'oxygène provenant des cylindres pauvres provoquant alors une réaction exothermique qui élève rapidement la température du catalyseur.

Cependant, l'efficacité de cette stratégie dans le cas des moteurs à injection indirecte de l'essence dans les tubulures d'admission et à fonctionnement homogène de répartition du mélange dans les cylindres, reste modeste, car la richesse des cylindres pauvres ne peut alors guère descendre en-dessous de 0,8, en particulier lorsque le moteur est froid. Par conséquent, il y a peu d'oxygène présent dans les gaz d'échappement, de sorte que la réaction exothermique est faible.

Par le document FR 2 755 186; il est connu d'améliorer encore l'efficacité de la réaction exothermique, en faisant fonctionner en régime stratifié le premier groupe de cylindres du moteur qui est alimenté en mélange pauvre, et en faisant fonctionner en régime homogène le second groupe de cylindres du moteur qui est alimenté en mélange riche.

Cependant, en appliquant ainsi le procédé du document antérieur précité, on a constaté qu'il se produit, en raison de la différentiation de la richesse dans les différents cylindres du moteur, des écarts de puissance pénalisant le confort de conduite, car les puissances fournies par les groupes de cylindres ne sont pas les mêmes.

La présente invention a pour but de proposer un procédé d'échauffement d'un catalyseur qui permet, en partant de la stratégie connue dont une brève description vient d'être faite, d'obtenir un échauffement très rapide d'un catalyseur branché dans la ligne d'échappement d'un moteur à injection directe d'essence, tout en préservant le confort de conduite.

L'invention a donc pour objet un procédé d'échauffement d'un catalyseur équipant un moteur à combustion interne à injection directe d'essence comprenant plusieurs cylindres, lors du démarrage de ce moteur, ce procédé

- consistant à alimenter un premier groupe de cylindres en mélange pauvre et un second groupe desdits cylindres en mélange riche et consistant également à alimenter ledit premier groupe de cylindres en mélange stratifié et ledit second groupe de cylindres en mélange homogène,
- ce procédé étant caractérisé en ce qu'il consiste en outre à uniformiser la puissance de tous les cylindres du moteur pendant la phase d'échauffement du catalyseur.

Grâce à ces caractéristiques, il devient possible d'obtenir, même en phase d'échauffement du moteur un confort de conduite qui ne diffère pas de celui assuré pendant tout le fonctionnement du moteur, malgré le fait que l'on réussisse à abaisser la richesse dans les cylindres du premier groupe à une valeur pouvant atteindre 0,5 et à augmenter considérablement les quantités de gaz réducteurs et de gaz oxydants, la réaction exothermique capable d'échauffer le catalyseur devenant ainsi plus forte.

Selon d'autres caractéristiques de l'invention:

- l'alimentation en mélange stratifié pauvre dudit premier groupe de cylindres est réalisée en injectant l'essence pendant la phase de compression de ce premier groupe de cylindres;
- la richesse des mélanges introduits dans les cylindres du premier groupe et le nombre de cylindres de celui-ci sont choisis pour que la richesse moyenne globale avec laquelle sont alimentés tous les cylindres du moteur, soit faiblement pauvre, de préférence égale à 0,9;
- l'uniformisation de puissance est réalisée en retardant l'allumage des cylindres dudit second groupe de cylindres;
- dans le cas où ledit moteur est équipé d'une alimentation en air régulée, il consiste à uniformiser la puissance des cylindres par augmentation de la masse d'air introduite dans les cylindres du premier groupe et/ou par réduction de la masse d'air introduite dans les cylindres du second groupe;

- il est mis en oeuvre après mise en température dudit catalyseur jusqu'à une température prédéterminée, de préférence égale à 200°C.

D'autres caractéristiques et avantages de l'invention apparaîtront aux cours de la description qui va suivre donnée uniquement à titre d'exemple et faite en se référant aux dessins annexés sur lesquels :

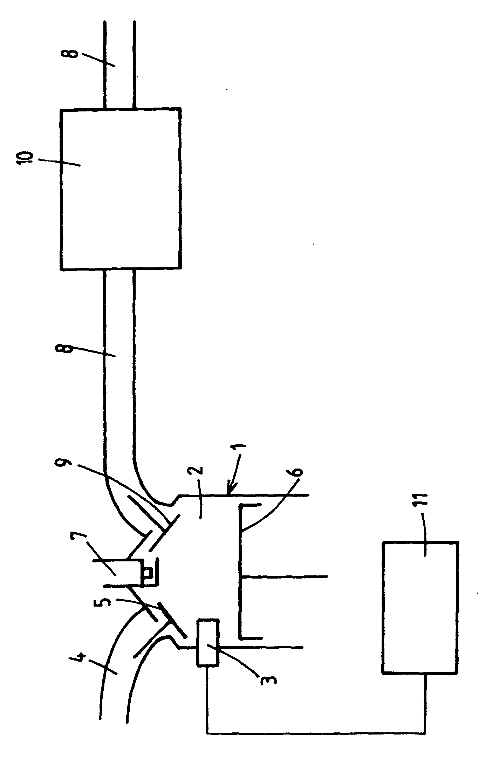

- la figure unique est un schéma très simplifié d'un moteur à combustion interne à injection directe dont le catalyseur peut être échauffé par le procédé selon l'invention.

Sur cette figure unique, on a représenté schématiquement un seul cylindre 1 d'un moteur à combustion interne à injection directe dans la chambre de combustion 2 duquel peut être injectée de l'essence à l'aide d'un injecteur 3. De l'air peut parvenir dans la chambre de combustion 2 à travers un collecteur d'admission d'air 4 sous la commande d'une soupape d'admission 5. Le mélange présent dans la chambre de combustion 2 peut être comprimé par un piston 6 et allumé par une bougie 7. Les gaz de combustion parviennent dans une ligne d'échappement 8 sous la commande d'une soupape d'échappement 9, la ligne d'échappement 8 comprenant un catalyseur 10 chargé d'épurer les gaz d'échappement. Un calculateur 11 commande le fonctionnement des divers organes à l'aide d'un programme approprié. Il gère notamment la masse d'essence injectée par l'injecteur 3 et les instants d'allumage du mélange par la bougie 4.

Pour simplifier le dessin, on n'a représenté qu'un seul cylindre du moteur, qui en comporte en réalité plusieurs (quatre par exemple), dans les chambres de combustion desquels on peut faire sélectivement brûler un mélange riche ou un mélange pauvre sous la commande du calculateur 11, notamment lors du démarrage à froid du moteur afin de permettre un échauffement rapide du catalyseur 10. On notera que le procédé selon l'invention s'applique également si le moteur est équipé de plusieurs catalyseurs montés en série ou en parallèle.

Un premier groupe de cylindres du moteur est alimenté en mélange stratifié pauvre, tandis qu'un second groupe de cylindres reçoit un mélange homogène riche. Pour alimenter le premier groupe de cylindres, l'essence est injectée pendant la phase de compression du mélange dans leur chambre de combustion, moyennant quoi, l'essence n'a pas le temps de se mélanger à l'air de manière homogène avant l'allumage par la bougie 7; le mélange est alors stratifié.

Par contre, pour alimenter le second groupe de cylindres, l'essence est injectée pendant la phase d'admission de l'air dans leur chambre de combustion.

Si on appelle $Ma_i$ la masse d'air dans le cylindre i du moteur, on peut écrire pour la masse Mi d'essence à injecter:

$$M_i = Ma_i.R_i.Ks$$

dans laquelle Ks est une constante (pouvant être égale à 14,7 environ, par exemple) et $R_i$ est la richesse moyenne du mélange du cylindre i. On convient que le mélange est pauvre lorsque $R_i < 1$ et riche lorsque $R_i > 1$.

Par ailleurs, on peut écrire l'équation suivant pour la richesse moyenne globale avec laquelle sont alimentés tous les cylindres du moteur:

$$RKs = \Sigma M_i / \Sigma Ma_i = \Sigma(Ma_i.R_i / \Sigma Ma_i$$

Cette équation peut être simplifiée, si la masse d'air $Ma_i$ admise dans tous les cylindres du moteur est identique. On a alors $Ma_i = Ma$ avec Ma=masse d'air totale admise. Dès lors on peut écrire:

$$R = \Sigma R_i / \text{nombre de cylindres}$$

On choisit les richesses des différents cylindres des deux groupes et donc leur mode de combustion (stratifié ou homogène), ainsi que le nombre de cylindres du second groupe de telle sorte que cette richesse globale moyenne des mélanges envoyés dans tous les cylindres soit légèrement pauvre, une valeur avantageuse de la richesse globale étant 0,9 par exemple.

Par ailleurs, on détermine la quantité des gaz réducteurs dans les gaz d'échappement provenant du second groupe de cylindre de telle façon qu'elle soit suffisante pour obtenir l'exothermicité voulue dans le catalyseur 10. La réaction dans les gaz d'échappement sera d'autant plus intense que le nombre de cylindres du second groupe sera important et que la richesse dans les cylindres de ce groupe sera élevée. La limite à la puissance de la réaction exothermique dépend des limites physiques haute et basse des richesses avec lesquelles on peut alimenter les cylindres sans trop dégrader la combustion.

Il convient de noter que la différentiation de la richesse dans les différents cylindres du moteur provoque des écarts de puissance qui sont très pénalisants pour le confort de conduite, car les cylindres du second groupe fournissent plus de puissance que ceux du premier groupe.

Selon l'invention, il est procédé à une uniformisation des puissances fournies par les cylindres. Dans la configuration du moteur telle qu'elle vient d'être décrite à l'aide de la figure, cette uniformisation est réalisée en retardant l'instant d'allumage des cylindres du second groupe pendant la période d'échauffement du catalyseur. Le calculateur 11 peut déterminer le degré de retard à l'allumage à appliquer en fonction notamment de la richesse avec laquelle sont alimentés les cylindres du second groupe et de la puissance fournie par ceux du premier groupe.

Cette uniformisation des puissances des cylindres peut également être réalisée en régulant les masses d'air introduites dans les différents cylindres. Bien entendu, cette régulation ne peut être mise en oeuvre que si le moteur est équipé d'un système de commande des masses d'air admises dans les cylindres respectifs. Dans ces conditions, l'uniformisation des puissances peut être obtenue en augmentant la masse d'air dans les cylindres du premier groupe et/ou en diminuant la masse d'air admise dans les cylindres du second groupe.

Selon encore une autre caractéristique de l'invention, le procédé est mis en oeuvre lorsque, après démarrage du moteur, le catalyseur a atteint une température prédéterminée. Il s'est avéré qu'une température adéquate à cet égard est de 200°C environ, température à laquelle les réactions exothermiques dans la ligne d'échappement commencent à avoir lieu.

Bien entendu, le procédé selon l'invention est arrêté dès que le calculateur 11 constate une température du catalyseur à laquelle celui-ci peut normalement faire son office d'épuration des gaz d'échappement.

## Revendications

1. Procédé d'échauffement d'un catalyseur (10) équipant un moteur à combustion interne à injection directe d'essence comprenant plusieurs cylindres (1), lors du démarrage de ce moteur, ce procédé

   - consistant à alimenter un premier groupe de cylindres (1) en mélange pauvre et un second groupe desdits cylindres (1) en mélange riche et consistant également à alimenter ledit premier groupe de cylindres (1) en mélange stratifié et ledit second groupe de cylindres (1) en mélange homogène,
   - ce procédé étant **caractérisé en ce qu'**il consiste également à uniformiser la puissance de tous les cylindres (1) du moteur pendant l'échauffement du catalyseur (10).

2. Procédé suivant la revendication 1, **caractérisé en ce que** l'alimentation en mélange stratifié pauvre dudit premier groupe de cylindres (1) est réalisée en injectant l'essence pendant la phase de compression de ce premier groupe de cylindres.

3. Procédé suivant l'une quelconque des revendications 1 et 2, **caractérisé en ce que** la richesse des mélanges introduits dans les cylindres (1) du second groupe et le nombre de cylindres de celui-ci sont choisis pour que la richesse moyenne globale avec laquelle sont alimentés tous les cylindres du moteur, soit faiblement pauvre de préférence égale à 0,9.

4. Procédé suivant la revendication 1, **caractérisé en ce que** l'uniformisation de puissance est réalisée en retardant l'allumage des cylindres (1) dudit second groupe de cylindres.

5. Procédé suivant la revendication 1, **caractérisé en ce que**, dans le cas où ledit moteur est équipé d'une alimentation en air régulée, il consiste à uniformiser la puissance des cylindres (1) par augmentation de la masse d'air introduite dans les cylindres du premier groupe et/ou par réduction de la masse d'air introduite dans les cylindres du second groupe.

6. Procédé suivant l'une quelconque des revendications précédentes, **caractérisé en ce qu'**il est mis en oeuvre après mise en température dudit catalyseur (10) jusqu'à une température prédéterminée, de préférence égale à 200°C.

## Patentansprüche

1. Verfahren zur Erwärmung eines Katalysators (10), welcher einen Verbrennungsmotor mit Benzindirekteinspritzung ausstattet, welcher mehrere Zylinder (1) umfasst, beim Anlassen des Motors, dieses Verfahren

   - besteht im Versorgen einer ersten Gruppe von Zylindern (1) mit magerem Gemisch und einer zweiten Gruppe der Zylinder (1) mit fettem Gemisch und besteht gleichermaßen im Versorgen der ersten Gruppe der Zylinder (1) mit geschichtetem Gemisch und der zweiten Gruppe der Zylinder (1) mit homogenen Gemisch,
   - wobei das Verfahren **dadurch gekennzeichnet ist, dass** es gleichermaßen im Vereinheitlichen der Leistungen aller der Zylinder (1) des Motors während der Erwärmung des Katalysators (10) besteht.

2. Verfahren nach Anspruch 1, **dadurch gekennzeichnet, dass** die Versorgung mit geschichtetem, magerem Gemisch der ersten Gruppe der Zylinder (1) durch Einspritzen von Benzin während der Phase der Kompression dieser ersten Gruppe von Zylindern verwirklicht ist.

3. Verfahren nach einem der Ansprüche 1 und 2, **dadurch gekennzeichnet, dass** das Mischungsverhältnis der in die Zylinder (1) der zweiten Gruppe eingebrachten Gemische und die Anzahl der Zylinder desselben so gewählt sind, dass das mittlere globale Mischungsverhältnis, mit welchem all die Zylinder des Moors versorgt werden, leicht. mager ist, bevorzugter Weise gleich 0,9.

**4.** Verfahren nach Anspruch 1, **dadurch gekennzeichnet, dass** die Vereinheitlichung der Leistung verwirklicht wird, indem die Zündung der Zylinder (1) der zweiten Gruppe der Zylinder verzögert wird.

**5.** Verfahren nach Anspruch 1, **dadurch gekennzeichnet, dass**, in dem Fall, in dem der Motor mit einer regulierten Luftversorgung ausgestattet ist, es darin besteht, die Leistungen der Zylinder (1) durch Erhöhen der in die Zylinder der ersten Gruppe eingebrachten Luftmasse und/oder durch Verminderung der in die Zylinder der zweiten Gruppe eingeführten Luftmasse zu vereinheitlichen.

**6.** Verfahren nach einem der vorhergehenden Ansprüche, **dadurch gekennzeichnet, dass** es nach auf Temperaturbringen des Katalysators (10) bis zu einer vorherbestimmten Temperatur angewandt wird, bevorzugter Weise gleich 200° C.

**Claims**

**1.** Method of heating a catalyst (10) fitted to a direct injection petrol internal combustion engine comprising several cylinders (1), when the engine is started, this method

- consisting of supplying a first group of cylinders (1) with a poor mixture and a second group of said cylinders (1) with a rich mixture and also consisting of supplying said first group of cylinders (1) with a stratified mixture and said second group of cylinders (1) with a homogeneous mixture,
- this method being **characterized in that** it also consists of evening out the power of all of the cylinders (1) of the engine during the heating of the catalyst (10).

**2.** Method according to claim 1, **characterized in that** the supply of said first group of cylinders (1) with a stratified poor mixture is carried out by injecting the petrol during the compression phase of this first group of cylinders.

**3.** Method according to any one of claims 1 and 2, **characterized in that** the ratio of the mixtures admitted into the cylinders (1) of the second group and the number of cylinders **in that** group are chosen so that the average overall ratio with which all of the cylinders of the engine are supplied is slightly poor, preferably equal to 0.9.

**4.** Method according to claim 1, **characterized in that** the evening out of power is carried out by delaying the ignition of the cylinders (1) of said second group of cylinders.

**5.** Method according to claim 1, **characterized in that**, if said engine is equipped with a regulated air supply, it consists of evening out the power of the cylinders (1) by increasing the air mass admitted in-to the cylinders in the first group and/or by reducing the air mass admitted into the cylinders in the second group.

**6.** Method according to any one of the previous claims, **characterized in that** it is implemented after heating of said catalyst (10) to a predetermined temperature, preferably equal to 200°C.